# EUROPEAN PATENT SPECIFICATION

(11) **EP 2 403 170 B1**
(45) Date of publication and mention of the grant of the patent: **03.04.2013**
(21) Application number: 10305706.3
(22) Date of filing: 29.06.2010
(51) Int. Cl.: H04J 14/02

(54) **A reconfigurable optical add and drop wavelength multiplexer for an optical network using wavelength division multiplexing**
Rekonfigurierbarer optischer Add/Drop-Wellenlängenmultiplexer für ein optisches Netzwerk unter Verwendung von Wellenlängenmultiplex
Multiplexeur optique d'extraction/insertion de longueur d'onde reconfigurable pour réseau optique utilisant un multiplexage à division de longueur d'onde

(43) Date of publication of application: 04.01.2012
(73) Proprietor: Alcatel Lucent, 75007 Paris (FR)
(72) Inventor: Zami, Thierry, 91620, NOZAY (FR); Rainsant, Jean-Marc, 94620, NOZAY (FR); Lemonnier, Nicolas, 91620, NOZAY (FR)
(74) Representative: Sciaux, Edmond

(56) References cited:
- WO-A1-03/052978
- US-A1- 2007 286 605
- US-A1- 2008 056 715

## Description

The technical domain of the invention is the domain of network devices for optical communication networks, and particularly Wavelength Division Multiplexing, WDM, networks.

More particularly, the invention concerns a Reconfigurable Optical Add and Drop Wavelength Multiplexer, ROADM, built over Wavelength Selective Switches, WSS.

An optical network or system is known as "transparent" when the signal remains in the optical domain without any conversion in the electronic domain. Transparency in optical communication networks is a feature allowing a drastic decrease in network devices cost by suppressing optical-electric-optical conversions and the corresponding transducers.

Some devices used in transparent WDM networks are, among others, ROADMs also known as Optical Cross Connect, OXC. To build such devices, a component known as Wavelength Selective Switch, WSS, is of a great interest. This component allows building commutation nodes of whatever wanted degree with great configuration flexibility, with a structure simpler than using discrete components, with lesser bulk and higher liability. However this component is rather costly.

US 2008/056715 discloses commutation transparent WDM node arrangements in which WSSs are used bidirectionaly to realize functions such as insertion/adding of signals or extraction/dropping of signals and transparent transmission of signals between several directions. Due to the bidirectional use of the WSSs, an attenuation trimming of a given wavelength impacts signals of said wavelength on both directions.

The document US 2007/286605 discloses a tunable bidirectional multiplexer/demultiplexer for adding and dropping wavelength channels between an optical transmission system and at least one optical transceiver. The MUX/DEMUX includes a 1xN wavelength-selective switch having a single input/output port on a first side for receiving and outputting multiplexed optical signals, and a plurality of input/output ports on a second side for receiving a plurality of multiplexed or individual optical signals. The switch and ports are configured such that an optical signal communicated from the transceiver port to the add port follows a first optical path, and an optical signal communicated from the drop port to the transceiver port follows a second optical path, where a portion of the first and second optical paths are the same.

The document WO 2003/052978 discloses an optical WDM ring network includes add/drop nodes connected in a ring path. The ring path comprises a single optical fiber arranged for bidirectional traffic between the nodes. Signals from the other node to the first node are issued to travel on both segments but the switch used in one add/drop node for switching signals forwarded from the node to another node selects the actual segment from which the signals are received in the first node. On the segment from which the high priority signals are not received, low priority signals in non-protected channels can be communicated between the nodes, these channels also passing the switch.

A main idea of the invention is to build a network device for a transparent network such as a reconfigurable add and drop wavelength multiplexer, ROADM, over a foundation comprising a limited number of wavelength selectable switches, WSSs.

The object of the invention is described in the appended claims.

The proposed solution advantageously offers a network device presenting a great flexibility of configuration, in order to face situations such as highly loaded network, small number of available channels, failure of transceivers or receivers, or severe constraints over the power of transmitted or received optical signals.

Others features, details and advantages of the invention will become more apparent from the detailed illustrating description given hereafter with respect to the drawings on which:
- figure 1 is a schema of a first embodiment of a network device working in a broadcast and select mode,
- figure 2 is a schema of a second embodiment of a network device working in a select and combine mode.

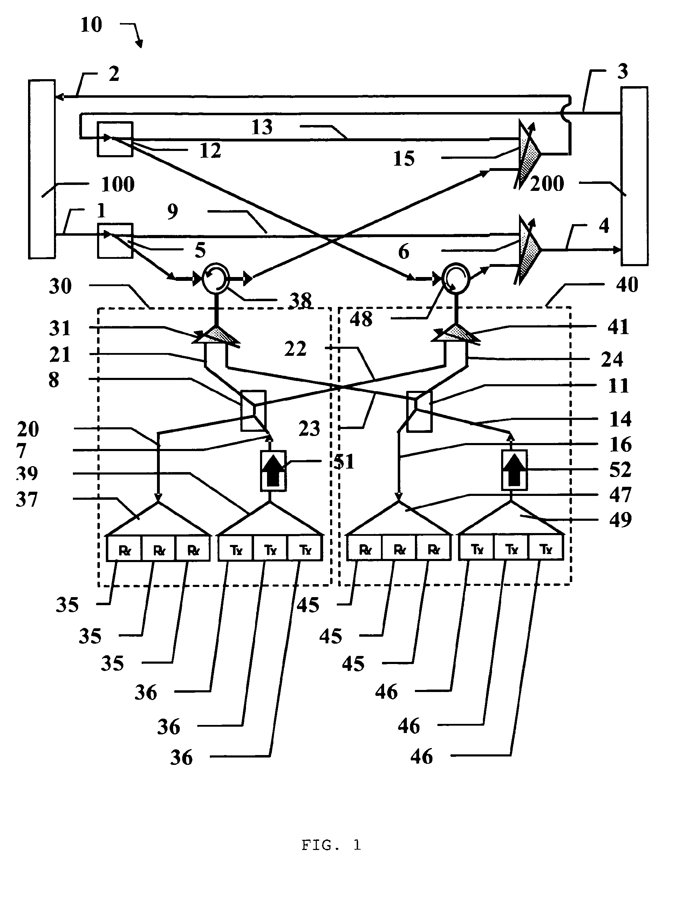

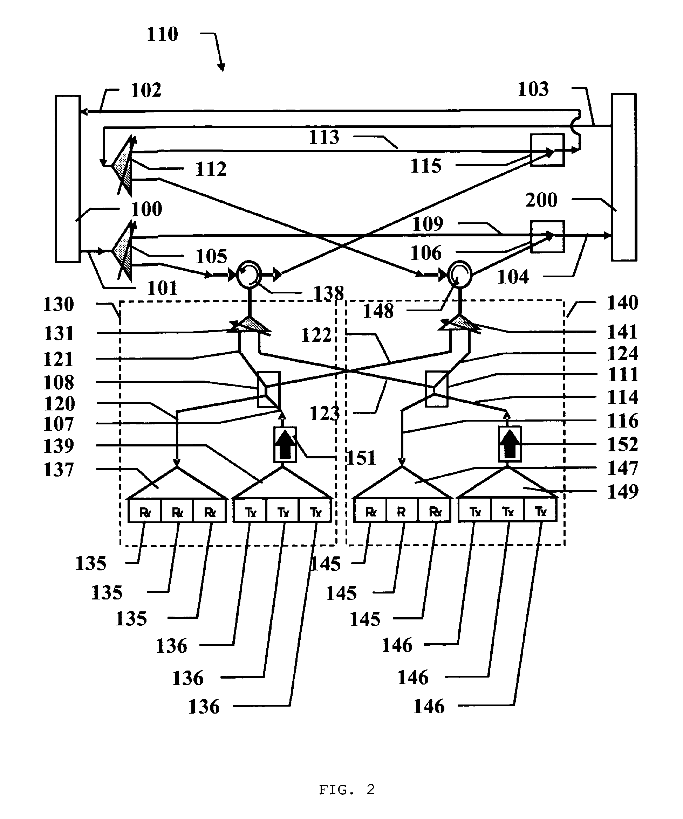

With reference to figures 1 and 2, showing two embodiments of the invention, common features are described first. Corresponding components receive in figure 2 the same reference number as in figure 1 with 100 added.

The invention concerns a network device for an optical network using wavelength division multiplexing that can be used as a reconfigurable optical add and drop wavelength multiplexer device. Said network device comprises two optical ingress sections and two optical egress sections. The first optical ingress section 1;101 is able to be connected to a first network neighbour device 100 to receive a first input traffic. The second optical ingress section 3;103 is able to be connected to a second network neighbour device 200 to receive a second input traffic. The first optical egress section 2; 102 is able to be connected to said first network neighbour device 100 to send a first output traffic. The second optical egress section 4;104 is able to be connected to said second network neighbour device 200 to send a second output traffic. Each of these sections 1,2,3,4; 101,102,103,104 may typically be optical fibre segment. The traffics carried over are typically wavelength division multiplexed signals, the optical frequencies of which are aligned along a grid, such as an ITU grid.

So equipped with ingress and egress sections, said network device 10;110 can be included, as a node, in a network.

The main functions of an reconfigurable optical add and drop wavelength multiplexer are the transparent transmission of optical signal comprising several channels/wavelengths multiplexed in frequency, to and from at least a first and a second neighbour node 100,200, the insertion/add of optical channels from at least one add port, and the extraction/drop of optical channels toward at least one drop port.

To allow the main add and drop function of the device 10;110, it further comprises two add and drop modules 30,40;130,140. Each of these modules comprise: a wavelength selective switch 31,41;131,141, an optical coupler 8,11;108,111, a plurality of optical receivers 35,45;135,145 to send signals dropped from the network and a plurality of optical transmitters 36,46;136,146 to receive signals added to the network.

A wavelength selective switch 6,15,31,41; 105,112,131,141 comprises at least a common port and a plurality of selectable ports. The number of selectable ports is two for all the wavelength selective switches used in the example. However said number could be any integer, but the same for all the wavelength selective switches in a device 10,110.

Said wavelength selective switch 6,15,31,41; 105,112,131,141 is an optical bidirectional device. As is known in the art, it receives, respectively sends, a multiplexed signal comprising all channels/wavelengths on its common port. It can be configured to selectively multiplex or demultiplex optical signals and to selectively let pass through it a first subset of said channels/wavelengths between said common port and a first of its said selectable ports and also a second subset of said wavelengths between said common port and a second of its said selectable ports.

So doing, a wavelength selective switch, when acting as a programmable wavelength demultiplexer, is able to redirect any channels/wavelengths received on its common port used as an input, to any of the selectable ports, used as outputs. Each selectable port may thus selectively receive one, several, or none of the channels/wavelengths received at the input. A deleting or blocking function of at least one selectable channel/wavelength may also be included in a wavelength selective switch.

When acting as a programmable wavelength multiplexer, a wavelength selective switch, uses its common port as an output and its selectable ports as inputs. The wavelength selective switch is able to selectively redirect, depending on the wavelength and a command, any optical channel received from a selectable port toward a multiplexed signal provided to the common port. It is necessary for the redirected channels to be of different wavelength. On any selectable input port, may be received any one channel/wavelength, several channels/wavelengths or none. A deleting or blocking function of a selectable channel/wavelength may also be included.

The invention, in both of its embodiments, comprises some wavelength selective switches 6,15,31,41; 105,112,131,141, either in said add and drop modules 30,40;130,140 or in transit lines. All of these wavelength selective switches are functionally similar. Among other, they are all "calibrated" over the same grid of wavelength, e.g. an ITU grid.

An optical coupler 8,11;108,111 is a four ports/links device. It functions as a 2x2 coupler, between its top side and its bottom side, merging the two signals coming from one side and copying said merged signal to the two ports/links on the other side. The merging in this case is possible because the wavelengths used by the two said signals are not overlapping.

The four links of an optical coupler 8,11;108,111 comprises a first link 21,23;121,123, a second link 22,24;122,124, both located on the same side, the top side on the figures, and both used bidirectionally. The four links of an optical coupler further comprises a link used as an input link 7,14;107,114 and a link used as an output link 16,20;116,120, both located on the same other side.

For each respective add and drop module 30,40;130,140, said output link 16,20;116,120 is connected respectively to said plurality of optical receivers 35,45;135,145. According to the function of the optical coupler 8,11;108,111, optical channels sent to said output link 16,20;116,120 are optical channels to drop, and composed off the merging of the two optical signals received from any one of the bidirectional links 21,22,23,24; 121,122,123,124. To distribute the optical channels toward the receivers 35,45;135,145 of each plurality, a distribution means 37,47;137,147 may be used. Said distribution means may be a wavelength demultiplexer, a wavelength selectable multiplexer or a non coloured component such as a power divider.

For each respective add and drop module 30,40;130,140, said input link 7,14;107,114 is connected respectively to said plurality of optical transmitters 36,46;136,146. According to the function of the optical coupler 8,11;108,111, signals received from said input link 7,14;107,114 are channels to add, and are duplicated towards both bidirectional links 21,22,23,24; 121,122;123,124 of the corresponding coupler 8,11;108,111 to be transmitted. To combine the optical channels from the transmitters 36,46;136,146 of each plurality, a combination means 39,49;139,149 may be used. Said combination means may be a wavelength multiplexer, a wavelength selectable multiplexer or a non coloured component such as a power combiner.

For each respective add and drop module 30,40;130,140, the common port of the wavelength selective switch 31,41;131,141 is connected to an optical ingress section 1,3;101;103. The common port of the wavelength selective switch 31;131 of the first add and drop module 30;130 is connected to the first optical ingress section 1;101. The common port of the wavelength selective 41;141 switch of the second add and drop module 40;140 is connected to the second optical ingress section 3;103. These connections may e.g. be done through optical circulators 38,48;138,148. The wavelength selective switches 31,41;131,141 are here used both as wavelength multiplexer and wavelength demultiplexer.

The two optical couplers 8,11;108,111 respectively pertaining to the two add and drop modules 30,40;130,140 are cross-connected in the following way. The first, respectively second, bidirectional link 21,22;121,122 of the optical coupler 8;108 of the first add and drop module 30;130 is connected to the first selectable port of the wavelength selective switch 31,41;31,141 of the first, respectively second, add and drop modules 30,40;130,140. Also, the first, respectively second, bidirectional link 23,24;123,124 of the optical coupler 11;111 of the second add and drop module 40;140 is connected to the second selectable port of the wavelength selective switch 31,41;131,141 of the first, respectively second, add and drop modules 30,40;130,140.

In order to provide the possibility to also transmit some channels/wavelengths just added, received from said first, respectively second, add and drop module 30,40;130,140, to said first, respectively second, element 100,200, another connection may be added. According to said connection, the common port of the wavelength selective switch 31;131 of the first add and drop module 30;130 is also connected to the first optical egress section 2;102 through a first optical circulator 38;138 and the common port of the wavelength selective switch 41;141 of the second add and drop module 40;140 is also connected to the second optical egress section 4;104 through a second optical circulator 48;148.

Said optical circulator 38,48;138;148 is useful to connect said common port to said optical egress section 2,4;102,104, since said common port is already connected to an optical ingress section 1,3;101,103. Said first, respectively second, optical circulator 38,48;138,148 is such that optical signal arriving from first, respectively second, optical ingress section 1,3;101,103 is sent toward said first, respectively second, common port, and optical signal arriving from said first, respectively second, common port is sent toward first, respectively second, optical egress section 2,4;102,104.

In order to avoid some possible interference, it may be advantageous to add an optical isolator 51,52;151,152 on said input link 7,14;107,114 of said coupler 8,11;108,111. Said optical isolator 51,52;151,152 may be inserted between said coupler 8,11;108,111 and the corresponding plurality of optical transmitters 36,46;136,146.

In order to provide the possibility to directly transmit some channels/wavelengths received from said first, respectively second, element 100,200 to said second, respectively first, element 100,200, another transit section 9,13;109,113 may be added. Such a first, respectively second, unidirectional optical transit section 9,13;109,113 connects the first, respectively second, optical ingress section 1,3;101,103 to the second, respectively first, optical egress section 2,4;102,104.

In order to be able to select some wavelengths and thus provide routing functionalities, in the device 10;110, each of the respective first and second unidirectional optical transit sections 9,13;109,113 comprises a wavelength selective means 6,15;105,112 for selecting the first, respectively second, transit traffic by selecting the wavelength of the first, respectively second, input traffic.

Until now the description applied to both embodiments of figure 1 and 2.

With reference to figure 2, in the following sections, will now be described the particular features of the second embodiment. This embodiment is dedicated to a "select and combine" version of the reconfigurable optical add and drop wavelength multiplexer 110.

In such a select and combine device 110, a wavelength selective means 105,112 is placed at the entrance of the device 110, and is completed by an optical power combiner 106,115 at the exit of the device 110.

Said wavelength selective means comprises a first, respectively second, wavelength selective switch 105,112 whose common port is connected to the first, respectively second, optical ingress section 101,103, whose first selectable port is connected to the second, respectively first, optical egress section 102,104, and whose second selectable port is connected to the first, respectively second, optical circulator 138,148. The wavelength selective switches 105,112 are here used as wavelength demultiplexer.

A power combiner 106,115 is a two inputs, one output optical coupler that optically merges the two optical signals received from its two inputs, said merged signal being available on its output.

Said first, respectively second, power combiner 106,115 is connected at its inputs to said first, respectively second, unidirectional optical transit section 109,113 and to said second, respectively first, optical circulator 138,148.

Said first, respectively second, power combiner 106,115 is connected at its output to the second, respectively first, optical egress section 2,4;102,104.

With reference to figure 1, in the following sections, will now be described the particular features of the first embodiment. This embodiment is dedicated to a "broadcast and select" version of the reconfigurable optical add and drop wavelength multiplexer 10. One advantage of said broadcast and select version is a capacity to extract/drop and simultaneously to transparently transmit a given optical channel. Said channel both drops and continues.

In such a broadcast and select device 10, a power divider 5,12 is placed at the entrance of the device 10, and is completed by a wavelength selective means 6,15 at the exit of the device 10.

Said wavelength selective means comprises a first, respectively second, wavelength selective switch 6,15 whose common port is connected to the first, respectively second, optical egress section 2,4, whose first selectable port is connected to the second, respectively first, optical ingress section 1,3, and whose second selectable port is connected to the second, respectively first, optical circulator 38,48. The wavelength selective switches 6,15 are here used as wavelength multiplexer.

A power divider 5,12 is a one input, two outputs optical coupler that optically duplicates the optical signal received from the input towards the two outputs.

Said first, respectively second, power divider 5,12 is connected at its input to the first, respectively second, optical ingress section 1,3.

Said first, respectively second, power divider 5,12 is connected at its outputs to the first, respectively second, unidirectional optical transit section 9, 13 and to the first, respectively second, optical circulator 38, 48.

Others arrangement are also possible, by combining the components of the figures 1 and 2. According to another embodiment, any one of the power dividers 5,12 of figure 1 or the power combiner 106,115 of figure 2 may be replaced by a wavelength selectable multiplexer. So doing a wavelength selectable multiplexer is used at both ends of the transit lines 9,13;109,113.

According to another embodiment, the wavelength selectable multiplexers 6,15;105,112 at the ends of the transit lines 9,13;109,113 may be replaced by non coloured components such as optical couplers. In such case, optical blockers over some given wavelengths may be added on said transit lines to block the channels/wavelengths that must not reach the neighbour node.

## Claims

1. A reconfigurable optical add and drop wavelength multiplexer device (10, 100) for an optical network using wavelength division multiplexing, comprising:
a first optical ingress section (1 ; 101) able to be connected to a first network neighbour device (100) to receive a first input traffic,
a second optical ingress section (3 ; 103) able to be connected to a second network neighbour device (200) to receive a second input traffic,
a first optical egress section (2 ; 102) able to be connected to said first network neighbour device (100) to send a first output traffic,
a second optical egress section (4 ; 104) able to be connected to said second network neighbour device (200) to send a second output traffic,
a first and second add and drop modules (30, 40 ; 130, 140) each comprising
a plurality of optical transmitters (36, 46 ; 136, 146),
a plurality of optical receivers (35, 45 ; 135, 145), and
a wavelength selective switch (31, 41 ; 131, 141) comprising a common port and a plurality of selectable ports, said wavelength selective switch (31, 41 ; 131, 141) being configured to selectively let pass through a first subset of the wavelengths of the optical network between said common port and a first of said selectable ports, said wavelength selective switch (31, 41 ; 131, 141) being further configured to selectively let pass through a second subset of the wavelengths of the optical network between said common port and a second of said selectable ports, **characterized by** each of the first and second add and drop modules comprising:
an optical coupler (8, 11 ; 108, 111) comprising a first bidirectional link (21, 23 ; 121, 123), a second bidirectional link (22, 24 ; 122, 124), an input link (7, 14 ; 107, 114) and an output link (16, 20 ; 116, 120),
wherein said input link (7, 14 ; 107, 114) is connected to the plurality of optical transmitters (36, 46 ; 136, 146) to receive signals to add and transmit them towards both bidirectional links (21, 22, 23, 24 ; 121, 122, 123, 124), wherein said output link (16, 20 ; 116, 120) is connected to the plurality of optical receivers (35, 45 ; 135, 145) to send signals to drop transmitted from any one of the bidirectional links (21, 22, 23, 24 ; 121, 122, 123, 124),
wherein the common port of the wavelength selective switch (31, 41 ; 131, 141) of the first, respectively second, add and drop module (30, 40 ; 130, 140) is connected to the first, respectively second, optical ingress section (1, 3 ; 101, 103),
wherein said first, respectively second, bidirectional link (21, 22 ; 121, 122) of the optical coupler (8 ; 108) of the first add and drop module (30 ; 130) is connected to the first selectable port of the wavelength selective switch (31, 41 ; 131, 141) of the first, respectively second, add and drop modules (30, 40 ; 130, 140),
wherein said first, respectively second, bidirectional link (23, 24 ; 123, 124) of the optical coupler (11 ; 111) of the second add and drop module (40 ; 140) is connected to the second selectable port of the wavelength selective switch (31, 41 ; 131, 141) of the first, respectively second, add and drop modules (30, 40 ; 130, 140).

2. The device of claim 1, wherein it also comprises a first optical circulator (38 ; 138) and a second optical circulator (48 ; 148), wherein the common port of the wavelength selective switch (31 ; 131) of the first add and drop module (30 ; 130) is also connected to the first optical egress section (2 ; 102) through the first optical circulator (38 ; 138) and the common port of the wavelength selective switch (41 ; 141) of the second add and drop module (40 ; 140) is also connected to the second optical egress section (4 ; 104) through the second optical circulator (48 ; 148).

3. The device of claim 1 or 2, wherein said input link (7, 14 ; 107, 114) comprises an optical isolator (51, 52 ; 151, 152).

4. The device of any one of claims 1 to 3, further comprising a first unidirectional optical transit section (9 ; 109) to let pass a first transit traffic between the first optical ingress section (1 ; 101) and the second optical egress section (4 ; 104) and a second unidirectional optical transit section (13 ; 113) to let pass a second transit traffic between the second optical ingress section (3 ; 103) and the first optical egress section (2 ; 102).

5. The device of claim 4, wherein each of the respective first and second unidirectional optical transit sections (9, 13 ; 109, 113) comprises a wavelength selective means (6, 15 ; 105, 112) for selecting the first, respectively second, transit traffic by selecting the wavelength of the first, respectively second, input traffic.

6. The device of claim 5, wherein said wavelength selective means comprises a first, respectively second, wavelength selective switch (105, 112) whose common port is connected to the first, respectively second, optical ingress section (101, 103), whose first selectable port is connected to the second, respectively first, optical egress section (102, 104), and whose second selectable port is connected to the first, respectively second, optical circulator (138, 148).

7. The device of claim 5, wherein said wavelength selective means comprises a wavelength selective switch (6, 15), whose common port is connected to the first, respectively second optical egress section (2, 4), whose first selectable port is connected to the second, respectively first, optical ingress section (1, 3), and whose second selectable port is connected to the second, respectively first, optical circulator (38, 48).

8. The device of any one of claims 4 to 6, wherein
said first, respectively second, unidirectional optical transit section (109, 113) and said second, respectively first, optical circulator (138, 148) are connected to the second, respectively first, optical egress section (102, 104) trough a power combiner (106, 115).

9. The device of any one of claims 4, 5 and 7, wherein said first, respectively second, unidirectional optical transit section (9, 13) and said first, respectively second, optical circulator (38, 48) are connected to the first, respectively second, optical ingress section (1, 3) trough a power divider (5, 12).

## Patentansprüche

1. Rekonfigurierbare optische Add-Drop-Wellenlängenmultiplexvorrichtung (10, 100) für ein optisches Netzwerk, welches das Wellenlängenmultiplexverfahren anwendet, umfassend:
Einen ersten optischen Eingangsabschnitt (1; 101), welcher an eine erste benachbarte Netzwerkvorrichtung (100) angeschlossen werden kann, um einen ersten Eingangsverkehr zu empfangen,
einen zweiten optischen Eingangsabschnitt (3; 103), welcher an eine zweite benachbarte Netzwerkvorrichtung (200) angeschlossen werden kann, um einen zweiten Eingangsverkehr zu empfangen,
einen ersten optischen Ausgangsabschnitt (2; 102), welcher an die besagte erste benachbarte Netzwerkvorrichtung (100) angeschlossen werden kann, um einen ersten Ausgangsverkehr zu senden,
einen zweiten optischen Ausgangsabschnitt (4; 104), welcher an die besagte zweite benachbarte Netzwerkvorrichtung (200) angeschlossen werden kann, um einen zweiten Ausgangsverkehr zu senden,
ein erstes und ein zweites Add-Dropp-Modul (30, 40; 130, 140), von denen ein jedes eine Vielzahl von optischen Sendern (36, 46; 136, 146) und eine Vielzahl von optischen Empfängern (35, 45; 135, 145) umfasst, und
einen wellenlängenselektiven Schalter (31, 41; 131, 141) mit einem gemeinsamen Port und einer Vielzahl von auswählbaren Ports, wobei der besagte wellenlängenselektive Schalter (31, 41; 131, 141) dafür konfiguriert ist, selektiv einen ersten Teilsatz der Wellenlängen des optischen Netzwerks zwischen dem besagten gemeinsamen Port und
einem ersten der besagten auswählbaren Ports passieren zu lassen, wobei der besagte wellenlängenselektive Schalter (31, 41; 131, 141) weiterhin dafür konfiguriert ist, selektiv einen zweiten Teilsatz der Wellenlängen des optischen Netzwerks zwischen dem besagten gemeinsamen Port und einem zweiten der besagten auswählbaren Ports passieren zu lassen,
**dadurch gekennzeichnet, dass** sowohl das erste als auch das zweite Add-Drop-Modul umfasst:
Eine optischen Koppler (8, 11; 108, 111) mit einer ersten bidirektionalen Verbindung (21, 23; 121, 123), einer zweiten bidirektionalen Verbindung (22, 24; 122, 124), einer Eingangsverbindung (7, 14; 107, 114) und einer Ausgangsverbindung (16, 20; 116, 120), wobei die besagte Eingangsverbindung (7, 14; 107, 114) an die Vielzahl von optischen Sendern (36, 46; 136, 146) angeschlossen ist, um die hinzuzufügenden Signale zu empfangen und an beide bidirektionalen Verbindungen (21, 22, 23, 24; 121, 122, 123, 124) zu übertragen, wobei die besagte Ausgangsverbindung (16, 20; 116, 120) an die Vielzahl von optischen Empfängern (35, 45; 135, 145) angeschlossen ist, um von einer beliebigen der bidirektionalen Verbindungen (21, 22, 23, 24; 121, 122, 123, 124) übertragene zu entnehmende Signale zu senden,
wobei der gemeinsame Port des wellenlängenselektiven Schalters (31, 41; 131, 141) des ersten, beziehungsweise zweiten, Add-Drop-Moduls 10 (30, 40; 130, 140) an den ersten, beziehungsweise zweiten, optischen Eingangsabschnitt (1, 3; 101, 103) angeschlossen ist,
wobei die besagte erste, beziehungsweise zweite, bidirektionale Verbindung (21, 22; 121, 122) des optischen Kopplers (8; 108) des ersten Add-Drop-Moduls (30; 130) an den ersten auswählbaren Port des wellenlängenselektiven Schalters (31, 41; 131, 141) des ersten, beziehungsweise zweiten, Add-Drop-Moduls (30, 40; 130, 140) angeschlossen ist, wobei die besagte erste, beziehungsweise zweite, bidirektionale Verbindung (23, 24; 123, 124) des optischen Kopplers (11; 111) des zweiten Add-Drop-Moduls (40; 140) an den zweiten auswählbaren Port des wellenlängenselektiven Schalters (31, 41; 131, 141) des ersten, beziehungsweise zweiten, Add-Drop-Moduls (30, 40; 130, 140) angeschlossen ist.

2. Vorrichtung nach Anspruch 1, ebenfalls umfassend einen ersten optischen Zirkulator (38; 138) und einen zweiten optischen Zirkulator (48; 148), wobei der gemeinsame Port des wellenlängenselektiven Schalters (31; 131) des esten Add-Drop-Moduls (30; 130) über den ersten optischen Zirkulator (38; 138) ebenfalls an den ersten optischen Ausgangsabschnitt (2; 102) angeschlossen ist und der gemeinsame Port des wellenlängenselektiven Schalters (41; 141) des zweiten Add-Drop-Moduls (40; 140) über den zweiten optischen Zirkulator (48; 148) ebenfalls an den zweiten optischen Ausgangsabschnitt (4; 104) angeschlossen ist.

3. Vorrichtung nach Anspruch 1 oder 2, wobei die besagte Eingangsverbindung (7, 14; 107, 114) einen optischen Isolator (51, 52; 151, 152) umfasst.

4. Vorrichtung nach einem beliebigen der Ansprüche 1 bis 3, weiterhin umfassend einen ersten unidirektionalen optischen Transitabschnitt (9; 109), um einen ersten Transitverkehr zwischen dem ersten optischen Eingangsabschnitt (1; 101) und dem zweiten optischen Ausgangsabschnitt (4; 104) passieren zu lassen, und einen zweiten unidirektionalen optischen Transitabschnitt (13; 113), um einen zweiten Transitverkehr zwischen dem zweiten optischen Eingangsabschnitt (3; 103) und dem ersten optischen Ausgangsabschnitt (2; 102) passieren zu lassen.

5. Vorrichtung nach Anspruch 4, wobei sowohl der erste als auch der zweite unidirektionale optische Transitabschnitt (9, 13; 109, 113) ein wellenlängenselektives Mittel (6, 15; 105, 112) umfasst, um den ersten, beziehungsweise zweiten, Transitverkehr durch Auswählen der Wellenlänge des ersten, beziehungsweise zweiten, Eingangsverkehrs auszuwählen.

6. Vorrichtung nach Anspruch 5, wobei das besagte wellenlängenselektive Mittel einen ersten, beziehungsweise einen zweiten, wellenlängenselektiven Schalter (105, 112) umfasst, dessen gemeinsamer Port an den ersten, beziehungsweise zweiten, optischen Eingangsabschnitt (101, 103) angeschlossen ist, dessen erster auswählbarer Port an den zweiten, beziehungsweise ersten, optischen Ausgangsabschnitt (102, 104) angeschlossen ist, und dessen zweiter auswählbarer Port an den ersten, beziehungsweise zweiten, optischen Zirkulator (138, 148) angeschlossen ist.

7. Vorrichtung nach Anspruch 5, wobei das besagte wellenlängenselektive Mittel einen wellenlängenselektiven Schalter (6, 15) umfasst, dessen gemeinsamer Port an den ersten, beziehungsweise zweiten, optischen Ausgangsabschnitt (2, 4) angeschlossen ist, dessen erster auswählbarer Port an den zweiten, beziehungsweise ersten, optischen Eingangsabschnitt (1, 3) angeschlossen ist, und dessen zweiter auswählbarer Port an den ersten, beziehungsweise zweiten, optischen Zirkulator (38, 48) angeschlossen ist.

8. Vorrichtung nach einem beliebigen der Ansprüche 4 bis 6, wobei der besagte erste, beziehungsweise zweite, unidirektionale optische Transitabschnitt (109, 113) und der besagte zweite, beziehungsweise erste, optische Zirkulator (138, 148) über einen Leistungsaddierer (106, 115) an den zweiten, beziehungsweise ersten, optischen Ausgangsabschnitt (102, 104) angeschlossen sind.

9. Vorrichtung nach einem beliebigen der Ansprüche 4, 5 und 7, wobei der besagte erste, beziehungsweise zweite, unidirektionale optische Transitabschnitt (9, 13) und der besagte erste, beziehungsweise zweite, optische Zirkulator (38, 48) über einen Leistungsverteiler (5, 12) an den ersten, beziehungsweise zweiten, optischen Eingangsabschnitt (1, 3) angeschlossen sind.

## Revendications

1. Dispositif de multiplexage de longueur d'onde à insertion/extraction optique reconfigurable (10, 100) pour un réseau optique utilisant le multiplexage par répartition en longueur d'onde, comprenant :
une première section d'entrée optique (1 ; 101) pouvant être connectée à un premier dispositif voisin de réseau (100) pour recevoir un premier trafic d'entrée,
une deuxième section d'entrée optique (3 ; 103) pouvant être connectée à un deuxième dispositif voisin de réseau (200) pour recevoir un deuxième trafic d'entrée,
une première section de sortie optique (2 ; 102) pouvant être connectée audit premier dispositif voisin de réseau (100) pour envoyer un premier trafic de sortie,
une deuxième section de sortie optique (4 ; 104) pouvant être connectée audit deuxième dispositif voisin de réseau (200) pour envoyer un deuxième trafic de sortie,
un premier et un deuxième modules à insertion/extraction (30, 40 ; 130, 140) comprenant chacun une pluralité d'émetteurs optiques (36, 46 ; 136, 146), une pluralité de récepteurs optiques (35, 45 ; 135, 145), et
un commutateur sélectif de longueur d'onde (31, 41 ; 131, 141) comprenant un port commun et une pluralité de ports sélectionnables, ledit commutateur sélectif de longueur d'onde (31, 41 ; 131, 141) étant configuré pour transférer sélectivement un premier sous-ensemble des longueurs d'onde du réseau optique entre ledit port commun et un premier desdits ports sélectionnables, ledit commutateur sélectif de longueur d'onde (31, 41 ; 131, 141) étant en outre configuré pour transférer sélectivement un deuxième sous-ensemble des longueurs d'onde du réseau optique entre ledit port commun et un deuxième desdits ports sélectionnables,
et **caractérisé en ce que** chacun des premier et deuxième modules à insertion/extraction comprend :
un coupleur optique (8, 11 ; 108, 111) comprenant une première liaison bidirectionnelle (21, 23 ; 121, 123), une deuxième liaison bidirectionnelle (22, 24 ; 122, 124), une liaison d'entrée (7, 14 ; 107, 114) et une liaison de sortie (16, 20 ; 116, 120),
dans lequel ladite liaison d'entrée (7, 14 ; 107, 114) est connectée à la pluralité d'émetteurs optiques (36, 46 ; 136, 146) pour recevoir des signaux à insérer et pour les transmettre vers les deux liaisons bidirectionnelles (21, 22, 23, 24 ; 121, 122, 123, 124),
dans lequel ladite liaison de sortie (16, 20 ; 116, 120) est connectée à la pluralité de récepteurs optiques (35, 45 ; 135, 145) pour envoyer des signaux à extraire transmis à partir de l'une quelconque des liaisons bidirectionnelles (21, 22, 23, 24 ; 121, 122, 123, 124),
dans lequel le port commun du commutateur sélectif de longueur d'onde (31, 41 ; 131, 141) du premier, respectivement deuxième, module à insertion/extraction (30, 40 ; 130, 140) est connecté à la première, respectivement deuxième, section d'entrée optique (1, 3 ; 101, 103),
dans lequel ladite première, respectivement deuxième, liaison bidirectionnelle (21, 22 ; 121, 122) du coupleur optique (8 ; 108) du premier module à insertion/extraction (30; 130) est connectée au premier port sélectionnable du commutateur sélectif de longueur d'onde (31, 41 ; 131, 141) des premier, et respectivement deuxième, modules à insertion/extraction (30, 40 ; 130, 140),
dans lequel ladite première, respectivement deuxième, liaison bidirectionnelle (23, 24 ; 123, 124) du coupleur optique (11 ; 111) du deuxième module à insertion/extraction (40 ; 140) est connectée au deuxième port sélectionnable du commutateur sélectif de longueur d'onde (31, 41 ; 131, 141) des premier, et respectivement deuxième, modules à insertion/extraction (30, 40 ; 130, 140).

2. Dispositif selon la revendication 1, comprenant également un premier circulateur optique (38 ; 138) et un deuxième circulateur optique (48 ; 148), le port commun du commutateur sélectif de longueur d'onde (31 ; 131) du premier module à insertion/extraction (30 ; 130) étant également connecté à la première section de sortie optique (2 ; 102) par l'intermédiaire du premier circulateur optique (38 ; 138) et le port commun du commutateur sélectif de longueur d'onde (41 ; 141) du deuxième module à insertion/extraction (40 ; 140) étant également connecté à la deuxième section de sortie optique (4 ; 104) par l'intermédiaire du deuxième circulateur optique (48 ; 148).

3. Dispositif selon la revendication 1 ou 2, dans lequel ladite liaison d'entrée (7, 14 ; 107, 114) comprend un photocoupleur (51, 52 ; 151, 152).

4. Dispositif selon l'une quelconque des revendications 1 à 3, comprenant en outre une première section de transit optique unidirectionnel (9 ; 109) pour transférer un premier trafic de transit entre la première section d'entrée optique (1 ; 101) et la deuxième section de sortie optique (4 ; 104) et une deuxième section de transit optique unidirectionnel (13 ; 113) pour transférer un deuxième trafic de transit entre la deuxième section d'entrée optique (3 ; 103) et la première section de sortie optique (2 ; 102).

5. Dispositif selon la revendication 4, dans lequel chacune des première et deuxième sections de transit optique unidirectionnel respectives (9, 13 ; 109, 113) comprend un moyen sélectif de longueur d'onde (6, 15 ; 105, 112) pour sélectionner le premier, respectivement deuxième, trafic de transit en sélectionnant la longueur d'onde du premier, respectivement deuxième, trafic d'entrée.

6. Dispositif selon la revendication 5, dans lequel ledit moyen sélectif de longueur d'onde comprend un premier, respectivement deuxième, commutateur sélectif de longueur d'onde (105, 112) dont le port commun est connecté à la première, respectivement deuxième, section d'entrée optique (101, 103), dont le premier port sélectionnable est connecté à la deuxième, respectivement première, section de sortie optique (102, 104), et dont le deuxième port sélectionnable est connecté au premier, respectivement deuxième, circulateur optique (138, 148).

7. Dispositif selon la revendication 5, dans lequel ledit moyen sélectif de longueur d'onde comprend un commutateur sélectif de longueur d'onde (6, 15), dont le port commun est connecté à la première, respectivement deuxième, section de sortie optique (2, 4), dont le premier port sélectionnable est connecté à la deuxième, respectivement première, section d'entrée optique (1, 3), et dont le deuxième port sélectionnable est connecté au deuxième, respectivement premier, circulateur optique (38, 48).

8. Dispositif selon l'une quelconque des revendications 4 à 6, dans lequel ladite première, respectivement deuxième, section de transit optique unidirectionnel (109, 113) et ledit deuxième, respectivement premier, circulateur optique (138, 148) sont connectés à la deuxième, respectivement première, section de sortie optique (102, 104) par l'intermédiaire d'un groupeur de puissance (106, 115).

9. Dispositif selon l'une quelconque des revendications 4, 5 et 7, dans lequel ladite première, respectivement deuxième, section de transit optique unidirectionnel (9, 13) et ledit premier, respectivement deuxième, circulateur optique (38, 48) sont connectés à la première, respectivement deuxième, section d'entrée optique (1, 3) par l'intermédiaire d'un diviseur de puissance (5, 12).
